## Europäisches Patentamt
## European Patent Office
## Office européen des brevets

(19)

(11) Publication number: **0 272 887**
**B1**

(12)

# EUROPEAN PATENT SPECIFICATION

(45) Date of publication of the patent specification:
28.11.90

(51) Int. Cl.⁵: **C02F 1/20, E21B 43/20**

(21) Application number: **87311154.6**

(22) Date of filing: **17.12.87**

(54) Removal of oxygen from liquids.

(30) Priority: **23.12.86  GB 8630783**

(43) Date of publication of application:
**29.06.88 Bulletin 88/26**

(45) Publication of the grant of the patent:
**28.11.90 Bulletin 90/48**

(84) Designated Contracting States:
**BE ES FR GB IT NL**

(56) References cited:
**US-A- 3 480 083**
**US-A- 4 213 934**

(73) Proprietor: **The British Petroleum Company p.l.c.,**
**Britannic House Moor Lane, London EC2Y 9BU(GB)**

(72) Inventor: **Callaghan, Ian Charles, The British Petroleum**
**Company p.l.c. Chertsey Road, Sunbury-on-Thames**
**Middlesex, TW16 7LN(GB)**
Inventor: **Shaunak, Richa, The British Petroleum**
**Company p.l.c. Chertsey Road, Sunbury-on-Thames**
**Middlesex, TW16 7LN(GB)**

(74) Representative: **MacLeod, Malcolm et al, BP**
**INTERNATIONAL LIMITED Patents Division Chertsey**
**Road, Sunbury-on-Thames Middlesex TW16 7LN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to the removal of oxygen from water and more particularly to the removal of oxygen from sea water prior to injection into an offshore oil field.

A petroleum reservoir is formed by a suitably shaped porous stratum of rock sealed with an impervious rock. The nature of the reservoir rock is extremely important as the oil is present in the small spaces or pores which separate the individual rock grains.

Crude oil is generally found in a reservoir in association with water, which is often saline, and gas. Dependent upon the characteristics of the crude, the temperature and the pressure, the gas may exist in solution in the oil or as a separate phase in the form of a gas cap. The oil and gas occupy the upper part of the reservoir and below there may be a considerable volume of water, known as the aquifer, which extends throughout the lower levels of the rock.

For oil to move through the pores of the reservoir rock and into a veil, the pressure under which the oil exists in the reservoir must be greater than the pressure at the well.

The water contained in the aquifer is under pressure and is one source of drive. The dissolved gas associated with the oil is another and so is the free gas in the gas cap when this is present.

A time will come in the life of an oilfield to such an extent that it is no longer sufficient to force the oil out of the pores of the rock into the well. This stage is often reached before the greater part of the oil is recovered from the reservoir.

Formerly it was the practice to rely on natural drive for as long as possible, only resorting to artificial production methods when the natural pressure dropped too low to sustain a reasonable flow. However, it has now been established that the eventual recovery of oil from a reservoir can be much greater if the pressure is not allowed to drop significantly in the early stages of production. Similarly, by utilising artificial means of maintaining pressure early in the life of a reservoir, production offtake rates may often be adjusted to economic advantage.

Thus in order to maintain pressure, or to accelerate the natural drive, or to initiate a drive where none occurs naturally, it is frequently necessary to employ the technique known as secondary recovery. The simplest method of forcing the oil out of the reservoir rock is by direct displacement with another fluid. When water is used, the secondary recovery process is called water flooding.

Offshore reservoirs have no abundant, readily available supply of sea water and it is clearly advantageous to make use of this.

Sea water, however, contains significant quantities of dissolved oxygen, about 10ppm at 10°C, which renders it unsuitable for use in its raw state because of its corrosive action and its encouragement of bacterial growth. These defects can be reduced by either mechanical or chemical deoxygenation. The mechanical equipment currently used for such a purpose, bubble cap towers, is heavy and costly. Weight is, of course, a particularly serious disadvantage insofar as off-shore production platforms are concerned. Oxygen can be chemically removed from the water by the addition of sodium metabisulphite, but this can lead to further problems such as souring the crude oil in the reservoirs.

We have now discovered an improved chemical method for the removal of oxygen from water.

Thus according to the present invention there is provided a method for the removal of dissolved oxygen from water which method comprises treating the water with an effective amount of aqueous solution of a complex of a divalent salt of a metal selected from the first series of transition group metals and a polyol of general formula

R [CmH$_2$m-n(OH)n]R$^1$

wherein R and R$^1$, which may be the same or different, are -CH$_2$OH, -COOH or -CHO; m is a member in the range 3 to 8 and n is a number which is 8-m.

Preferably at least one of R and R$^1$ is -CH$_2$OH.

Suitable polyols include uronic acids, e.g., gluco-uronic acid; heptonic hydroxy acids, e.g. glucoheptonic acid; saccharic acids; and saccharic polyols, e.g. sorbitol and mannitol.

The preferred polyol is gluconic acid.

Preferred salts are those of manganese, chromium and iron, particularly manganese dichloride and manganous sulphate.

Manganese is environmentally safe to use because it is a beneficial trace metal. It may also act as a corrosion inhibitor.

The salt and polyol are suitably present in a molar ratio in the range 1:1 to 1:10 respectively.

The complex may be made simply by mixing aqueous solutions of the salt and the polyol. It is preferably rendered slightly alkaline, e.g. to a pH in the range 8-10, to ensure that the polyol is in anionic form.

The quantity employed will be dependent on the oxygen content of the water and will usually be in the range 1 to 5,000 ppm.

The complex is inexpensive and effective since residual oxygen contents of down to less than 10 ppb are readily achievable. It is simple to add and does not require the use of complex equipment.

As stated previously the complex is paricularly suitable for the treatment of sea water for injection into an offshore oil field.

Thus according to another aspect of the present invention there is provided a method for the recovery of crude oil from an offshore oil field which method comprises injecting sea water containing an effective amount of a complex as hereinbefore described into the reservoir through an injection well and recovering crude oil from the reservoir from a production well.

The complex, however, is not limited to this particular application and may also be employed in other areas, for example, the deoxygenation of fresh or deionised boiler feed water.

The invention is illustrated with reference to the following Examples.

Examples 1-8

The initial level of dissolved oxygen in a given volume of sea/tap/distilled water was measured using a Orbisphere high sensitivity oxygen detector system, Model No 2713. This is capable of accurately measuring dissolved oxygen levels between 1ppb and 20 ppm.

A known amount of scavenger complex, made by mixing equimolar quantities of 1.0M $MnCl_2$, 1.0M sodium gluconate and 0.1 ml concentrated NaOH was added to the water sample. The decay in dissolved oxygen level after a specified time was noted. The results are set out in the following Table 1.

Examples 1-6 were carried out at room temperature (about 20°C) and Examples 7 and 8 at elevated temperature.

EP 0 272 887 B1

TABLE 1

| Example | Feed | Scavenger Soln (ml) | O$_2$ Content Before treatment (ppb) | O$_2$Content After Treatment (ppb) | | |
|---|---|---|---|---|---|---|
| | | | | After 3 min | After 5 min | Subsequently |
| 1 | 200 ml distilled water | 20 | 8,300 | 30 | | 8(1) |
| 2 | 150 ml tap water | 15 | 8,050 | | 26 | |
| 3 | 150 ml tap water | 15 | 8,120 | | 26 | |
| 4 | 150 ml distilled water | 10 | 11,020 | 32 | | |
| 5 | 150 ml distilled water | 10 | 10,980 | 27 | | 17(2) |
| 6 | 100 ml sea water (ex Poole Harbour) | 10 | 7,840 | | 30 | |
| 7 | 150 ml tap water | 15 | 10,640 | <20 | | in 3 mins. |
| 8 | 150 ml tap water | 15 | 5,810 | <20 | | |

(1) After 1 hour
(2) After 20 minutes

Examples 9-12

The complex was prepared by mixing 2M solutions $MnCl_2$ and gluconic acid. Increasing quantities of 5M NaOH solution were added as indicated to 150ml sea water (ex Finnart, Loch Long) containing 2ml of the solution of the complex at 10°C.

The dissolved oxygen contents were noted after specified time intervals and the results are set out in Table 2.

TABLE 2

| Example | 9 | 10 | 11 | 12 |
|---|---|---|---|---|
| Time min. | Dissolved Oxygen Content (ppb) with Vol NaOH (ml) Added | | | |
| | 0.5 (pH 8) | 1.0 (pH 9) | 2.0 (pH 10) | 3.0 (pH 12 - 13) |
| 0 | 6900 | 7300 | 6560 | 7220 |
| 0.5 | 2090 | 310 | 480 | 640 |
| 1 | 510 | 42 | 330 | 530 |
| 1.5 | 174 | 21.7 | 270 | |
| 2 | 92 | 13.4 | 250 | 462 |
| 2.5 | 51.3 | 10.3 | | |
| 3 | 33 | 8.1 | 197 | 410 |
| 4 | 16 | 6.3 | 150 | 304 |
| 5 | 9.9 | 5.4 | 145 | 283 |
| 6 | | | 122 | 272 |
| 7 | | | 115 | 261 |
| 8 | | 5.2 | | |

This shows that deoxygenation is achieved most efficiently under slightly alkaline conditions about pH 9.

Examples 13-21.

The complex was prepared as in Example 9-12. Increasing quantities of the complex were added as indicated to 150ml sea water (ex Finnart) containing 1ml 5M NaOH solution, pH about 9, at 10°C.

The dissolved oxygen contents were noted after specified time intervals and the results are set out in Table 3.

## TABLE 3

| Ex. | 13 | 14 | 15 | 16 | 17 | 18 | 19 | 20 | 21 |
|---|---|---|---|---|---|---|---|---|---|
| Time min. | Dissolved Oxygen Content (ppb) with Vol Manganese/Polyol Complex (ml) Added | | | | | | | | |
| | 1 | 1.5 | 2 | 3 | 4 | 5 | 6 | 7 | 7 (0 NaOH) |
| 0 | 7300 | 6650 | 7300 | 7500 | 7050 | 6700 | 7000 | 7700 | 6650 |
| 0.5 | 1000 | 525 | 310 | 800 | 8000 | 600 | 540 | 1400 | 7200 |
| 1 | 210 | 126 | 42 | 126 | 700 | 180 | 88 | 180 | 5920 |
| 1.5 | 147 | 758 | 21.7 | 61.8 | 25.4 | 130 | 45 | 70 | 5200 |
| 2 | 100 | 51 | 13.4 | | 16 | 101 | 33 | 21 | 4800 |
| 2.5 | 69 | 36.2 | 10.3 | 42 | | | 18.6 | 15.3 | |
| 3 | 60.5 | 27.5 | 8.1 | 21.4 | | 62.8 | 14.3 | 13 | 4220 |
| 4 | 4.9 | 18.4 | 6.3 | 13.1 | 8.2 | 38 | 20.9 | 11.3 | 3880 |
| 5 | 39.1 | 11.9 | 5.4 | 9.5 | 7.3 | 25.5 | 9.3 | 10 | 3630 |
| 6 | 30.4 | 8.8 | | | | 17.4 | | | 3410 |
| 7 | | | | 6.8 | 6.7 | 12.7 | 8.0 | 9.2 | 3230 |
| 8 | 18.2 | | | | | 9.8 | 7.6 | | |
| 9 | | | | | | | | | |
| 10 | 11.9 | | | | | | | | |
| | | (20)3.7 | | | | | | | |
| | | (30)3.2 | | | | | | | |

This shows that optimum performance is achieved at a pH of about 9 and a dose level of 2ml (1.0M) solution of the complex in 150ml sea water, i.e. 13.3ml/litre.

**Claims**

1. A method for the removal of dissolved oxygen from water which method comprises treating the water with an aqueous solution of an oxygen scavenger characterised by the fact that the scavenger is a complex of a divalent salt of a metal selected from the first series of transition group metals and a polyol of general formula
R[CmH2m-n(OH)n]R[1]
wherein R and R[1], which may be the same or different, are -CH2OH, -COOH or -CHO; m is a number in the range 3 to 8 and n is a number which is 8-m.
2. A method according to claim 1 wherein at least one of R and R[1] is -CH2OH.

3. A method according to either of the preceding claims wherein the divalent salt is a salt of chromium, iron or manganese.

4. A method according to claim 3 wherein the salt is manganese dichloride or manganous sulphate.

5. A method according to any of the preceding claims wherein the polyol is gluconic acid.

6. A method according to any of the preceding claims wherein the salt and the polyol are present in a molar ratio in the range 1:1 to 1:10 respectively.

7. A method according to any of the preceding claims wherein the solution of the complex is rendered alkaline.

8. A method according to claim 7 wherein the pH of the solution of the complex is in the range 8-10.

9. A method according to any of the preceding claims wherein the water containing the dissolved oxygen is sea water.

10. A method for the recovery of crude oil from an offshore oilfield which method comprises injecting sea water containing an oxygen scavenger into the reservoir through an injection well and recovering crude oil from the reservoir from a production well characterised by the fact that the scavenger is a complex of a divalent salt of a metal selected from the first series of transition group metals and a polyol of general formula

R[CmH2m-n(OH)n]R1

wherein R and R1, which may be the same of different, are -CH2OH, -COOH or -CHO; m is a number in the range 3 to 8 and n is a number which is 8-m.

## Patentansprüche

1. Verfahren zur Entfernung von gelöstem Sauerstoff aus Wasser, umfassend das Behandeln des Wassers mit einer wäßrigen Lösung eines Sauerstoff-Fängers, gekennzeichnet durch die Tatsache, daß der Fänger ein Komplex eines zweiwertigen Salzes eines Metalls, ausgewählt aus der ersten Serie der Übergangsgruppenmetalle mit einem Polyol der allgemeinen Formel

R[CmH2m-n(OH)n]R1

ist, wobei R und R1, die gleich oder verschieden sein können, -CH2OH, -COOH oder -CHO sind,
m eine Zahl im Bereich von 3 bis 8 und
n eine Zahl, die 8-m ist, bedeuten.

2. Verfahren nach Anspruch 1, wobei mindestens einer der R und R1 -CH2OH ist.

3. Verfahren nach irgendeinem der vorangehenden Ansprüche, worin das zweiwertige Salz ein Salz von Chrom, Eisen oder Mangan ist.

4. Verfahren nach Anspruch 3, worin das Salz Mangandichlorid oder Mangansulfat ist.

5. Verfahren nach irgendeinem der vorangehenden Ansprüche, worin das Polyol Gluconsäure ist.

6. Verfahren nach irgendeinem der vorangehenden Ansprüche, worin das Salz und das Polyol in einem molaren Verhältnis im Bereich von 1:1 bis 1:10 anwesend sind.

7. Verfahren nach irgendeinem der vorangehenden Ansprüche, worin die Lösung des Komplexes alkalisch gemacht ist.

8. Verfahren nach Anspruch 7, worin der pH der Lösung des Komplexes im Bereich von 8 bis 10 liegt.

9. Verfahren nach irgendeinem der vorangehenden Ansprüche, worin das den gelösten Sauerstoff enthaltende Wasser Meerwasser ist.

10. Verfahren für die Gewinnung von Rohöl aus einem vor der Küste liegenden Ölfeld, umfassend das Einspritzen von einen Sauerstoff-Fänger enthaltendem Meerwasser durch eine Einspritzbohrung in das Reservoir und Gewinnung des Rohöls aus dem Reservoir durch eine Produktionsbohrung, dadurch gekennzeichnet, daß der Fänger ein Komplex eines zweiwertigen Salzes eines Metalles, ausgewählt aus der ersten Serie der Übergangsgruppenmetalle mit einem Polyol der allgemeinen Formel

R[CmH2m-n(OH)n]R1

ist, wobei R und R1, die gleich oder verschieden sein können, -CH2OH, -COOH oder -CHO sind,
m eine Zahl im Bereich von 3 bis 8 und
n eine Zahl, die 8-m ist, bedeuten.

## Revendications

1. Procédé d'élimination de l'oxygène dissous dans l'eau, procédé comprenant un traitement de l'eau à l'aide d'une solution aqueuse d'un absorbeur d'oxygène, caractérisé par le fait que l'absorbeur est un complexe d'un sel divalent d'un métal choisi dans la première série des métaux du groupe de transition et un polyol de formule générale R[CmH2m-n(OH)n]R1, où R et R1 qui peuvent être identiques ou différents, sont -CH2OH, -COOH ou -CHO; m est un nombre compris entre 3 et 8 et n est un nombre qui est 8-m.

2. Procédé selon la revendication 1, dans lequel l'un au moins de R et R1 est -CH2OH.

3. Procédé selon l'une quelconque des revendications précédentes, dans lequel le sel divalent est un sel de chrome, de fer ou de manganèse.

4. Procédé selon la revendication 3, dans lequel le sel est du dichlorure de manganèse ou du sulfate manganeux.

5. Procédé selon l'une quelconque des revendications précédentes, dans lequel le polyol est de l'acide gluconique.

6. Procédé selon l'une quelconque des revendications précédentes, dans lequel le sel et le polyol sont présents dans un rapport molaire situé dans la gamme de 1:1 à 1:10 respectivement.

7. Procédé selon l'une quelconque des revendications précédentes, dans lequel la solution du complexe est rendue alcaline.

8. Procédé selon la revendication 7, dans lequel le pH de la solution du complexe est dans la gamme de 8 à 10.

9. Procédé selon l'une quelconque des revendications précédentes, dans lequel l'eau contenant l'oxygène dissous est de l'eau de mer.

10. Procédé de récupération de pétrole brut dans un champ de pétrole en mer, procédé comprenant une injection, dans le réservoir, d'eau de mer contenant un absorbeur de l'oxygène par un puits d'injection et la récupération du pétrole brut depuis le réservoir à partir d'un puits de production, caractérisé par le fait que l'absorbeur est un complexe d'un sel divalent d'un métal choisi parmi la première série des métaux du groupe de transition et d'un polyol de formule générale $R[C_mH_{2m-n}(OH)_n]R^1$, où R et $R^1$ qui peuvent être identiques ou différents, sont $-CH_2OH$, $-COOH$ ou $-CHO$; m est un nombre compris entre 3 et 8 et n est un nombre qui est 8-m.